# EUROPEAN PATENT APPLICATION

(11) **EP 4 831 230 A1**
(43) Date of publication of application: **28.10.2026**
(21) Application number: 25172674.1
(22) Date of filing: 25.04.2025
(51) Int. Cl.: C08K 5/523, C08K 7/14, C08L 69/00

(54) **HYDROLYTICALLY STABLE POLYCARBONATE COMPOSITION AND METHOD OF MANUFACTURE AND USE THEREOF**

(71) Applicant: Trinseo Europe GmbH, 8808 Pfaeffikon (CH)
(72) Inventor: CHUNG, Luke, 8808 Pfaeffikon (CH); BOUQUET, Gilbert, 8808 Pfaeffikon (CH); JANSSEN, Pieter, 8808 Pfaeffikon (CH)
(74) Representative: SSM Sandmair

(57) **Abstract**

A hydrolytically stable composition includes at least 15% by weight and no greater than 95% by weight of a polycarbonate (PC) polymer, at least 2% by weight and no greater than 25% by weight of an organic phosphorus-containing flame retardant, and no greater than 5 ppm of an inorganic phosphate. A method of preparing a hydrolytically stable, polycarbonate-containing composition, includes the steps of providing a PC polymer, an organic phosphorus-containing flame retardant, and one or more reinforcing fibers, to one or more extruders to produce a final extrudate; and forming the final extrudate into a desired dimension or weight to produce the hydrolytically stable, polycarbonate-containing composition. The composition has no greater than 5 ppm of inorganic phosphate.

## Description

### FIELD OF THE INVENTION

The present invention generally relates to hydrolytically stable polycarbonate (PC) compositions and methods of manufacture and use thereof.

### BACKGROUND

Organic phosphates or organophosphates may be used as flame-retardant additives for PC compounds, polymers, or composites, such as without limitation PC composites containing reinforcing fibers (see e.g., Weil, E. et al., Flame Retardants in Commercial Use or Development for Polycarbonates and Polycarbonate Blends, in Flame Retardants for Plastics and Textiles, 161-186 (2016)). However, such PC compounds, polymers, or composites may not be hydrolytically stable under aging conditions with elevated temperature and high humidity (see e.g., U.S. Patent No. 8,669,314 and U.S. Pat. No. 10,017,623). Specifically, some hydrolytic byproduct(s) of phosphate flame retardants may deteriorate PC macromolecules and thereby shorten the lifetime of these PC compounds, polymers, or composites, and the formation of such byproduct(s) is often unavoidable due to the thermal history of the PC. No technical solutions exist to address such challenges.

### SUMMARY OF THE DISCLOSURE

An aspect of the present invention is a hydrolytically stable, polycarbonate-containing composition as disclosed herein. The composition may include a polycarbonate (PC) polymer. The composition may further include an organic phosphorus-containing flame retardant, such as without limitation bisphenol A bis(diphenyl phosphate) (BAPP). The composition may further include no greater than 5 ppm of inorganic phosphate such as PO₄³⁻. The composition may further include one or more reinforcing fibers, such as without limitation glass fibers. The composition may further include one or more impact modifiers, such as without limitation one or more impact modifiers with a core-shell structure. The composition may further include at least a fluoropolymer, such as without limitation polytetrafluoroethylene (PTFE). The composition may further include a hydrolytically stable phenolic antioxidant, such as without limitation octadecyl 3-(3,5-di-tert-butyl-4-hydroxyphenyl)propionate.

Another aspect of the present invention is a method of preparing the hydrolytically stable, polycarbonate-containing composition described in this disclosure that includes providing a PC polymer, an organic phosphorus-containing flame retardant, and one or more reinforcing fibers, to one or more extruders to produce a final extrudate. In an embodiment, the method further includes forming the final extrudate into a desired dimension or weight to produce the hydrolytically stable, polycarbonate-containing composition, wherein the composition includes no greater than 5 ppm of inorganic phosphate.

Another aspect of the present invention is a method of preparing the hydrolytically stable, polycarbonate-containing composition described in this disclosure that includes providing a PC polymer and an organic phosphorus-containing flame retardant, where the method may further include mixing the PC polymer and the organic phosphorus-containing flame retardant at a first extruder, using an in-line compounding method, to produce an extruded melt. The method may further include providing one or more reinforcing fibers to the extruded melt, at a second extruder, to produce a final extrudate. The method may further include dividing the final extrudate into a desired dimension or weight to produce the hydrolytically stable, polycarbonate-containing composition, wherein the composition includes no greater than 5 parts per million (ppm) of inorganic phosphate.

Another aspect of the present invention is use of the hydrolytically stable, polycarbonate-containing composition, as described in this disclosure, in household appliances, automobiles, aircraft, construction materials, consumer products, food storage and packaging, medical devices, energy storage devices, home batteries, and/or sport equipment, among others.

Another aspect of the present invention is an article of manufacture including the hydrolytically stable, polycarbonate-containing composition as described in this disclosure.

Another aspect of the present invention is a method of increasing the flame retardancy of an article which includes adding to the article the hydrolytically stable, polycarbonate-containing composition as described in this disclosure.

These and other aspects and features of nonlimiting embodiments of the present invention will become apparent to those skilled in the art upon review of the following description of specific nonlimiting embodiments of the invention in conjunction with the accompanying drawings.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings.

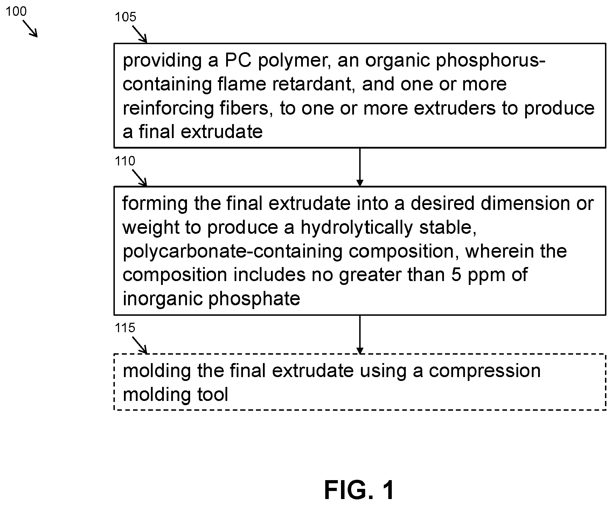

FIG. 1 depicts an exemplary flow diagram describing a method of preparing a hydrolytically stable, polycarbonate-containing composition.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION

To facilitate the understanding of this invention, a number of terms are defined below and throughout the disclosure. Unless otherwise defined, all technical and scientific terms used herein have the same meaning as commonly understood by one of ordinary skill in the art to which this invention pertains. The terminology herein is used to describe specific embodiments of the invention, but their usage does not limit the invention, except as outlined in the claims. All publications, patent applications, patents, and other references mentioned herein are incorporated by reference in their entireties.

It should be appreciated that the words "first", "second", and so on, in the description and claims, are used to distinguish or identify, and not to show a serial or numerical limitation.

Throughout the description and claims, the terms "comprise", "including", "having", "contain", and their variations should be understood as meaning "including but not limited to" and are not intended to exclude other components unless specifically so stated.

While the invention has been described in connection with what is presently considered to be the most practical and embodiments thereof are further described in the examples below, it is to be understood that the invention is not to be limited to the disclosed embodiments but is intended to cover various modifications and equivalent arrangements included within the spirit and scope of the appended claims.

The following description sets forth various examples along with specific details to provide a thorough understanding of claimed subject matter. It will be understood by those skilled in the art, however, that claimed subject matter may be practiced without one or more of the specific details disclosed herein. Further, in some circumstances, well-known methods, procedures, systems, and/or components have not been described in detail in order to avoid unnecessarily obscuring claimed subject matter.

### Hydrolytically Stable Composition

As used herein, a "hydrolytically stable" composition is a composition that is at least partially resistant against hydrolysis. In some cases, a hydrolytically stable composition may retain a portion of its original flexural strength after aging for an extended period of time, as described in further detail below in this disclosure. As a nonlimiting example, a hydrolytically stable composition may retain at least 75%, such as at least 80%, such as at least 85%, such as at least 90%, such as at least 95%, such as at least 99%, etc., of its original flexural strength after 1,000 hours of aging in a climate oven held at 85 °C and 85% relative humidity (RH). As used herein, "hydrolysis" is a type of chemical reaction between one or more chemical species and water. In some cases, hydrolysis of a compound, composition, or material may lead to one or more undesired byproducts being formed and/or cause damage to the structural integrity of the compound, composition, or material, consistent with details described elsewhere in this disclosure. For this reason, hydrolytically stable compositions may be ideal for outdoor use, especially in environments where moisture is present.

### Polycarbonate (PC) Polymer

In some embodiments, the composition may include a PC polymer. As used herein, "polycarbonate" or "PC" is a type of thermoplastic polymer containing carbonate groups in its chemical structure. It is a type of durable, often optically transparent material with a high impact resistance. A PC polymer may include any suitable type of polycarbonate or derivative thereof that is recognized as suitable, applicable, and/or relevant by a person of ordinary skill in the art, upon reviewing the entirety of this disclosure. A common type of PC is derived from bisphenol A (BPA), with carbonate groups connected between the aromatic rings thereof to form a polymer chain with repeating bisphenol A-carbonate units. The terms "PC" and "PC polymer" may be used interchangeably throughout this disclosure.

In some cases, a PC may be produced via a condensation reaction between BPA and phosgene (COCl₂). In some cases, a PC may be prepared from BPA and carbon monoxide. In some cases, a PC may be prepared using a transesterification reaction between BPA and a dialkyl carbonate (e.g., a dimethyl carbonate) to produce a bisphenol-A bisalkylcarbonate, followed by a melt-polycondensation of the bisphenol-A bisalkylcarbonate. In some cases, a PC may be prepared without using a catalyst. In some cases, a PC may be prepared using a solid-state synthesis. In some cases, a PC may be prepared using a catalyst, such as without limitation a homogeneous catalyst and/or an organometallic catalyst.

Additionally, and/or alternatively, in some cases, a PC polymer may be prepared using a BPA derivative, such as without limitation tetrabromobisphenol A (TBBPA), tetrabromobisphenol A bis(2,3-dibromopropyl) ether (TBBPA-DBPE), bisphenol A diphenyl phosphate (BADP), and/or the like. Such PC may be used as flame retardant or flame-retarding additives, consistent with details described elsewhere in this disclosure.

Additionally, and/or alternatively, in some cases, a PC polymer may include a BPA-free PC, such as without limitation a PC prepared using tetramethylcyclobutanediol as a monomer. Additionally, and/or alternatively, in some cases, a PC polymer may be prepared using a BPA analogue, such as without limitation 4,4'-dihydroxydiphenylmethane, which is also known as bisphenol F or BFF.

Additionally, and/or alternatively, in some cases, a PC polymer may include a CO₂-based polycarbonate, such as without limitation a CO₂-based polycarbonate prepared from CO₂ and epoxides, using a ring-opening polymerization reaction. Additionally, and/or alternatively, in some cases, a PC polymer may include a PC polymer prepared from a single carbonate monomer, such as without limitation via a ring-opening reaction. Additionally, and/or alternatively, in some cases, a PC polymer may include a linear and/or aliphatic polycarbonate, such as without limitation a PC synthesized using a dialkylcarbonate and a linear alkane diol. Additionally, and/or alternatively, in some cases, a PC polymer may include a bio-based PC polymer, such as without limitation a bio-based poly(limonene carbonate).

In some embodiments, the composition may include at least 15% by weight and no greater than 95% by weight of a PC polymer. In some preferred embodiments, the composition may include at least 20% by weight and no greater than 90% by weight of a PC polymer. In some embodiments, the composition may include at least 30% by weight and no greater than 70% by weight of a PC polymer.

As nonlimiting examples, the composition may include at least 15% by weight, at least 20% by weight, at least 25% by weight, at least 30% by weight, at least 35% by weight, at least 40% by weight, at least 45% by weight, at least 50% by weight, at least 55% by weight, at least 60% by weight, at least 65% by weight, and/or the like, of a PC polymer. As further nonlimiting examples, the composition may include no greater than 95% by weight, no greater than 90% by weight, no greater than 85% by weight, no greater than 80% by weight, no greater than 75% by weight, no greater than 70% by weight, no greater than 65% by weight, no greater than 60% by weight, no greater than 55% by weight, no greater than 50% by weight, and/or the like, of a PC polymer. As further nonlimiting examples, the composition may include at least 15% by weight and no greater than 20% by weight, at least 20% by weight and no greater than 25% by weight, at least 25% by weight and no greater than 30% by weight, at least 30% by weight and no greater than 35% by weight, at least 35% by weight and no greater than 40% by weight, at least 40% by weight and no greater than 45% by weight, at least 45% by weight and no greater than 50% by weight, at least 50% by weight and no greater than 55% by weight, at least 55% by weight and no greater than 60% by weight, at least 60% by weight and no greater than 65% by weight, at least 65% by weight and no greater than 70% by weight, at least 70% by weight and no greater than 75% by weight, at least 75% by weight and no greater than 80% by weight, at least 80% by weight and no greater than 85% by weight, at least 85% by weight and no greater than 90% by weight, at least 90% by weight and no greater than 95% by weight by weight, and/or the like, of a PC polymer.

### Virgin PC vs. Recycled PC

In some embodiments, the PC polymer may include only virgin PC. As used herein, "virgin" PC is a type of PC that is completely new and has never been used or processed before. Virgin PC is made directly from a raw material or materials, such as without limitation crude oil or natural gas, with no recycled components added. This is generally the purest form of a PC polymer without any additives or fillers. In some embodiments, the PC polymer may include a recycled PC. As used herein, a "recycled" PC is a type of PC material that was produced in another manufacturing context and/or previously used for a different use case or purpose. PC is a recyclable material under, e.g., recycling code 7. Unlike virgin PC described immediately above, recycled PC often contains one or more of additives, fillers, scraps, waste, contaminants, impurities, and/or the like, which can make processing the material more challenging. In some embodiments, the PC polymer may include only recycled PC. In some embodiments, the PC polymer may include both virgin PC and recycled PC. In some cases, the percentage of recycled PC that may be tolerated for producing the composition described herein may depend on certain manufacturing limitations and quality control metrics. As nonlimiting examples, the PC polymer may include at least 5% by weight, at least 10% by weight, at least 15% by weight, at least 20% by weight, at least 25% by weight, at least 30% by weight, and/or the like, of recycled PC. As further nonlimiting examples, the PC polymer may include at most 5% by weight, at most 10% by weight, at most 15% by weight, at most 20% by weight, at most 25% by weight, at most 30% by weight, at most 35% by weight, at most 40% by weight, at most 45% by weight, and/or the like, of recycled PC.

### Copolymer

In some embodiments, the composition may include PC as one or more copolymers. As used herein, a "copolymer" is a type of polymer derived from more than one type of monomer. Depending on the types of monomers involved, a copolymer may include a bipolymer (i.e., with two types of monomers), a terpolymer (i.e., with three types of monomers), a quaterpolymer (i.e., with four types of monomers), and/or the like. A copolymer may contain a specific ratio between different monomers, such as without limitation a 20:80 ratio for a bipolymer, a 10:80:10 ratio for a terpolymer, and/or the like. Additionally, depending on the type of copolymerization being used, a copolymer may accordingly be categorized as an alternating copolymer, a random copolymer, a block copolymer, a stereoblock copolymer, a periodic copolymer, a gradient copolymer, a graft copolymer, a brush copolymer, a star copolymer, and/or the like. As nonlimiting examples, the composition may include a PC-polyester copolymer, such as a PC-polyethylene terephthalate (PET) copolymer, a PC-polybutylene terephthalate (PBT) copolymer, and/or the like. As a further nonlimiting example, the composition may include a PC-acrylonitrile butadiene styrene (ABS) copolymer. As a further nonlimiting example, the composition may include a PC-poly(methyl methacrylate) (PMMA) copolymer. As a further nonlimiting example, the composition may include a PC-siloxane copolymer.

### Polymer Blend

In some embodiments, the composition may include PC as one or more polymer blends. As used herein, a "polymer blend" is a homogeneous mixture of two or more polymers. Unlike a copolymer that includes two or more types of monomers covalently linked to one another, a polymer blend is a physical mixture of polymers held together by intermolecular forces, without chemical bonds linking therebetween. As nonlimiting examples, the composition may include a PC-polyester polymer blend, such as a PC- PET polymer blend, a PC-PBT polymer blend, and/or the like. As a further nonlimiting example, the composition may include a PC-ABS polymer blend. As a further nonlimiting example, the composition may include a PC-PMMA polymer blend. As a further nonlimiting example, the composition may include a PC-siloxane polymer blend.

### Organic Phosphorus-Containing Flame Retardant

In some embodiments, the composition may include an organic phosphorus-containing flame retardant. As used herein, an "organic phosphorus-containing flame retardant" is an organic flame retardant that contains the element phosphorus in its composition or chemical formula. As used herein, an "organic flame retardant" is a flame retardant that contains, primarily or exclusively, one or more organic chemical species. As used herein, a "flame retardant" is a chemical species, or a combination of chemical species, that is added to a material to make it less combustible. In some cases, an organic phosphorus-containing flame retardant may include an organophosphate. As used herein, an "organophosphate" is a type of organic compound that contains one or more of PO₄ or O=P(OR)₃ linkages in its structure, with the P atom covalently connected to one O atom through a P=O double bond and three aliphatic and/or aromatic substituents, R, through three separate P-O single bonds. In some cases, an organophosphate may be referred to as a phosphate ester instead.

In some embodiments, the organic phosphorus-containing flame retardant may include one or more members selected from a group consisting of an oligomeric phosphate including bisphenol A bis(diphenyl phosphate) (BAPP), a poly(block-phosphonato-ester), a poly(block-phosphonato-carbonate), phosphoric acid 1,3-phenylene tetrakis(2,6-dimethylphenyl) ester, and resorcinol bis(2,6-dixylenyl phosphate).

In some embodiments, the organic phosphorus-containing flame retardant may include bisphenol A bis(diphenyl phosphate). As used herein, "bisphenol A bis(diphenyl phosphate)" or "BAPP" is an organophosphate ester with a chemical formula of C₃₉H₃₄O₈P₂. In some cases, BAPP may be referred to as BDP, BADP, or BRADP instead. BAPP is a type of flame retardant that may be used in plastics, electronics, and/or other consumer products. In some embodiments, bisphenol A bis(diphenyl phosphate) may include a derivative of BAPP, such as without limitation an oligomeric derivative of BAPP, as described in further detail below in this disclosure.

In some embodiments, the organic phosphorus-containing flame retardant may include an oligomeric phosphate, such as without limitation a BAPP oligomer. As used herein, an "oligomeric phosphate" is an organophosphate, as described above, that contains multiple, but often a small number of, repeating units in its molecular structure.

In some embodiments, the organic phosphorus-containing flame retardant may include phosphoric acid 1,3-phenylene tetrakis(2,6-dimethylphenyl) ester. As used herein, "phosphoric acid 1,3-phenylene tetrakis(2,6-dimethylphenyl) ester" is an organophosphate ester with a chemical formula of C₃₈H₄₀O₈P₂. In some cases, phosphoric acid 1,3-phenylene tetrakis(2,6-dimethylphenyl) ester may be referred to as resorcinol bis(2.6-dixylenyl phosphate) or RDX. RDX is a type of flame retardant for various engineering plastics and synthetic fibers. It is available from Daihachi Chemical under the brand name PX-200. Accordingly, in some embodiments, the organic phosphorus-containing flame retardant may include resorcinol bis(2,6-dixylenyl phosphate).

In some embodiments, the organic phosphorus-containing flame retardant may include a poly(block-phosphonato-ester). In some embodiments, the organic phosphorus-containing flame retardant may include a poly(block-phosphonato-carbonate). The poly(block-phosphonato-ester) or poly(block-phosphonato-cabonate) may have a single glass transition temperature (T_{g}) and may include a phosphonate oligomer or polyphosphonate block and one or more polyester, polycarbonate, or combination thereof covalently linked thereto (e.g., via transesterification polycondensation). The phosphonate oligomer or polyphosphonate may be linear or branched, may be prepared from stoichiometrically imbalanced mixture of a phosphonic acid diaryl ester and a bisphenol, and/or may have a number average molecular weight of from about 2,000 g/mol to about 35,000 g/mol. The polyester, polycarbonate, or combination thereof may have a weight average molecular weight of from about 20,000 g/mol to about 35,000 g/mol. The polyester may include aromatic and aliphatic polyesters, aromatic and aliphatic polycarbonates, polyalkylene terephthalates, polyethylene terephthalate, polyalkylene naphthalates, polyethylene naphthalate, polybutylene terephthalate, polycaprolactone, poly(butylene adipate), poly(hexamethylene sebacate), aromatic and aliphatic copolyesters, or combinations thereof. Additionally, and/or alternatively, the organic phosphorus-containing flame retardant may include any type of organic phosphorus-containing flame retardant not described herein but deemed suitable by a person of ordinary skill in the art, upon reviewing the entirety of this disclosure.

In some embodiments, the composition may include at least 2% by weight and no greater than 25% by weight of an organic phosphorus-containing flame retardant. In some embodiments, the composition may include at least 2% by weight and no greater than 20% by weight of an organic phosphorus-containing flame retardant. In some preferred embodiments, the composition may include at least 2% by weight and no greater than 15% by weight of an organic phosphorus-containing flame retardant. In some embodiments, the composition may include at least 3% by weight and no greater than 10% by weight of an organic phosphorus-containing flame retardant.

As nonlimiting examples, the composition may include at least 2% by weight, at least 3% by weight, at least 4% by weight, at least 5% by weight, at least 6% by weight, at least 8% by weight, at least 10% by weight, at least 12% by weight, at least 15% by weight, at least 20% by weight, and/or the like, of an organic phosphorus-containing flame retardant. As further nonlimiting examples, the composition may include no greater than 25% by weight, no greater than 22% by weight, no greater than 20% by weight, no greater than 18% by weight, no greater than 16% by weight, no greater than 14% by weight, no greater than 12% by weight, no greater than 10% by weight, no greater than 8% by weight, no greater than 6% by weight, no greater than 5% by weight, no greater than 4% by weight, no greater than 3% by weight, and/or the like, of an organic phosphorus-containing flame retardant. As further nonlimiting examples, the composition may include at least 2% by weight and no greater than 3% by weight, at least 3% by weight and no greater than 4% by weight, at least 4% by weight and no greater than 5% by weight, at least 5% by weight and no greater than 8% by weight, at least 8% by weight and no greater than 10% by weight, at least 10% by weight and no greater than 12% by weight, at least 12% by weight and no greater than 15% by weight, at least 15% by weight and no greater than 20% by weight, at least 20% by weight and no greater than 25% by weight, and/or the like, of an organic phosphorus-containing flame retardant.

### Inorganic Phosphate(s)

As used herein, an "inorganic phosphate" is a chemical species that contains at least one PO₄ moiety but no C-H or C-C bonds. An inorganic phosphate may form as a degradation product of the organic phosphate flame retardant during compounding and molding process at an elevated temperature. In some embodiments, the inorganic phosphate may have a chemical formula of PO₄³⁻, (i.e., the inorganic phosphate may include a phosphate ion or orthophosphate ion). In some embodiments, the inorganic phosphate may have a chemical formula of HPO₄²⁻ (i.e., the inorganic phosphate may include a hydrogen phosphate ion). In some embodiments, the inorganic phosphate may have a chemical formula of H₂PO₄⁻ (i.e., the inorganic phosphate may include a dihydrogen phosphate ion).

It was discovered that suppressing the formation of inorganic phosphate in a PC/phosphate flame retardant/glass fiber composite during compounding and molding process may improve the hydrolytic stability of the composite. Surprisingly, when the inorganic phosphate level (e.g., PO4³⁻ level, as measured by ion chromatography or IC) is controlled to a level < 5 mg/kg, preferably < 2 mg/kg (i.e., < 5 parts per million or ppm, preferably < 2 parts per million or ppm), selected mechanical properties may be well retained after 1,000 hours of aging at 85 °C and 85% relative humidity (RH). Additional details will be provided below in this disclosure.

In some embodiments, the composition may include no greater than 5 parts per million (ppm) of inorganic phosphate. In some embodiments, the composition may include no greater than 4 ppm of inorganic phosphate. In some embodiments, the composition may include no greater than 3 ppm of inorganic phosphate. In some embodiments, the composition may include no greater than 2 ppm of inorganic phosphate. As nonlimiting examples, the composition may include no greater than 1.8 ppm, no greater than 1.6 ppm, no greater than 1.4 ppm, no greater than 1.2 ppm, no greater than 1.0 ppm, no greater than 0.8 ppm, no greater than 0.6 ppm, no greater than 0.4 ppm, no greater than 0.2 ppm, and/or the like, of inorganic phosphate. In some embodiments, the composition may include from 0 to 5 ppm of inorganic phosphate. In some embodiments, the composition may include from 0 to 4 ppm of inorganic phosphate. In some embodiments, the composition may include from 0 to 3 ppm of inorganic phosphate. In some embodiments, the composition may include from 0 to 2 ppm of inorganic phosphate. In some embodiments, the composition may include from 0 to 1 ppm of inorganic phosphate. In some embodiments, the composition may include from 0 to 0.5 ppm of inorganic phosphate. In some embodiments, the composition may include from 0.1 to 2 ppm of inorganic phosphate. In some embodiments, the composition may include from 0.1 to 1 ppm of inorganic phosphate. In some embodiments, the composition may include from 0.1 to 0.5 ppm of inorganic phosphate.

In some embodiments, the composition may include no greater than 5 mg of inorganic phosphate per kg of the composition. In some embodiments, the composition may include no greater than 4 mg of inorganic phosphate per kg of the composition. In some embodiments, the composition may include no greater than 3 mg of inorganic phosphate per kg of the composition. In some embodiments, the composition may include no greater than 2 mg of inorganic phosphate per kg of the composition. As nonlimiting examples, the composition may include no greater than 1.8 mg, no greater than 1.6 mg, no greater than 1.4 mg, no greater than 1.2 mg, no greater than 1.0 mg, no greater than 0.8 mg, no greater than 0.6 mg, no greater than 0.4 mg, no greater than 0.2 mg, and/or the like, of inorganic phosphate per kg of the composition. In some embodiments, the composition may include from 0 to 5 mg of inorganic phosphate per kg of the composition. In some embodiments, the composition may include from 0 to 4 mg of inorganic phosphate per kg of the composition. In some embodiments, the composition may include from 0 to 3 mg of inorganic phosphate per kg of the composition. In some embodiments, the composition may include from 0 to 2 mg of inorganic phosphate per kg of the composition. In some embodiments, the composition may include from 0 to 1 mg of inorganic phosphate per kg of the composition. In some embodiments, the composition may include from 0 to 0.5 mg of inorganic phosphate per kg of the composition. In some embodiments, the composition may include from 0.1 to 2 mg of inorganic phosphate per kg of the composition. In some embodiments, the composition may include from 0.1 to 1 mg of inorganic phosphate per kg of the composition. In some embodiments, the composition may include from 0.1 to 0.5 mg of inorganic phosphate per kg of the composition. In some cases, the units of parts per million, ppm, and mg/kg may be used interchangeably throughout this disclosure.

### Reinforcing Fiber(s)

In some embodiments, the composition may include one or more reinforcing fibers. As used herein, a "reinforcing fiber" is a type of material of an elongated shape that, once integrated into a material, improves the mechanical properties of the material. A reinforcing fiber may include any type of fiber material seemed suitable or relevant by a person of ordinary skill in the art, upon reviewing the entirety of this disclosure.

In some embodiments, the one or more reinforcing fibers may include one or more members selected from a group consisting of glass fiber, carbon fiber, steel fiber, basalt fiber, aluminum fiber, magnesium fiber, nickel fiber, nickel-coated carbon fiber, nickel-coated basalt fiber, polyacrylonitrile fiber, polyaramid fiber, natural cellulose fiber, and mineral fiber.

In some embodiments, the one or more reinforcing fibers may include glass fiber. Glass fiber (GF) is characterized by its outstanding insulation, heat/creep resistance, and outstanding mechanical strength, and may be used as a metal replacement material, a plastic reinforcement material, and/or the like. As nonlimiting examples, GF-reinforced thermoplastic resin may be used in aerospace, electronic communication, manufacturing of lightweight automobile parts, and/or the like.

In some embodiments, GF may include glass roving. As used herein, "glass roving" is a type of glass fiber reinforcement material. It may be used in applications that require high mechanical strength and diverse filler loadings and is often assembled from filament bundles to provide both longitudinal and transverse reinforcement properties.

In some embodiments, the one or more reinforcing fibers may include carbon fiber, such as without limitation recycled carbon fiber. Carbon fiber represents a new generation of reinforced fiber materials and is characterized by its light weight, high strength, and high modulus. Its high performance and high added value may be further achieved once it's combined with resin to form fiber composites of different lengths.

In some embodiments, the one or more reinforcing fibers may include steel fiber, such as without limitation stainless steel fiber.

In some embodiments, the one or more reinforcing fibers may include basalt fiber (BF). BF is made of natural basalt ore, after crushing and melting the ore at 1450-1500 °C. It may be produced using a wire-drawing bushing made of a platinum-rhodium alloy. BF is characterized by some outstanding properties including without limitation low cost, heat insulation and/or preservation, moisture-proof, waterproof, fireproof, acid and alkali resistance, sound absorption, high tensile strength, corrosion resistance, and long-term use without deterioration, among others.

In some embodiments, the one or more reinforcing fibers may include aluminum fiber, such as without limitation aluminum alloy fiber.

In some embodiments, the one or more reinforcing fibers may include magnesium fiber, such as without limitation magnesium alloy fiber.

In some embodiments, the one or more reinforcing fibers may include nickel fiber, such as without limitation nickel alloy fiber.

In some embodiments, the one or more reinforcing fibers may include nickel-coated carbon fiber.

In some embodiments, the one or more reinforcing fibers may include nickel-coated basalt fiber.

In some embodiments, the one or more reinforcing fibers may include polyacrylonitrile fiber, such as without limitation pre-oxidized polyacrylonitrile fiber.

In some embodiments, the one or more reinforcing fibers may include polyparaphenylene terephthalamide or polyaramid fiber.

In some embodiments, the one or more reinforcing fibers may include natural cellulose fiber, such as without limitation flax fiber.

In some embodiments, the one or more reinforcing fibers may include mineral fiber, such as without limitation wollastonite fiber. As used herein, "wollastonite fiber" is a needle-shaped mineral. It is suitable for use in many industries, including plastics, ceramics, and paints, and may be used as an asbestos substitute.

In some embodiments, the composition may include no reinforcing fibers. In some embodiments, the composition may include at least 0.5% by weight of one or more reinforcing fibers. In some embodiments, the composition may include at least 1% by weight of one or more reinforcing fibers. In some preferred embodiments, the composition may include no greater than 80% by weight of one or more reinforcing fibers. In some embodiments, the composition may include from 0 to 80% by weight of one or more reinforcing fibers. In some embodiments, the composition may include from 1 to 80% by weight of one or more reinforcing fibers. As nonlimiting examples, the composition may include no greater than 75% by weight, no greater than 70% by weight, no greater than 65% by weight, no greater than 60% by weight, no greater than 55% by weight, no greater than 50% by weight, no greater than 45% by weight, no greater than 40% by weight, no greater than 35% by weight, no greater than 30% by weight, no greater than 25% by weight, no greater than 20% by weight, no greater than 15% by weight, no greater than 10% by weight, no greater than 5% by weight, and/or the like, of one or more reinforcing fibers. As further nonlimiting examples, the composition may include at least 0.5% by weight, at least 1% by weight, at least 2% by weight, at least 3% by weight, at least 4% by weight, at least 5% by weight, at least 6% by weight, at least 7% by weight, at least 8% by weight, at least 10% by weight, and/or the like, of one or more reinforcing fibers. As further nonlimiting examples, the composition may include at least 0.5% by weight and no greater than 5% by weight, at least 5% by weight and no greater than 10% by weight, at least 10% by weight and no greater than 15% by weight, at least 15% by weight and no greater than 20% by weight, at least 20% by weight and no greater than 25% by weight, at least 25% by weight and no greater than 30% by weight, at least 30% by weight and no greater than 40% by weight, at least 40% by weight and no greater than 50% by weight, at least 50% by weight and no greater than 60% by weight, at least 60% by weight and no greater than 70% by weight, at least 70% by weight and no greater than 80% by weight, and/or the like, of one or more reinforcing fibers

### Impact modifier(s)

In some embodiments, the composition may include one or more impact modifiers. As used herein, an "impact modifier" is a type of additive mixed into a plastic resin to significantly improve its resistance to impact, making the material tougher and less prone to cracking or breaking when struck or stressed. Essentially, an impact modifier enhances the durability of a material by absorbing the energy or shock of an impact through its elastomeric properties. Specifically, an impact modifier may perform its function by creating a dispersed phase within a polymer matrix, which can absorb and dissipate impact energy, preventing the material from failing under sudden stress. As nonlimiting examples, an impact modifier may include ethylene acrylic copolymers, acrylonitrile butadiene styrene (ABS), methacrylate butadiene styrene (MBS), and/or the like. Additional details of impact modifiers will be provided later in this disclosure.

In some embodiments, the one or more impact modifiers may include one or more members selected from a group consisting of a butadiene rubber-based methyl methacrylate-styrene, a styrene-butadiene rubber-based methyl methacrylate-styrene, a methyl methacrylate-grafted impact modifier, a siloxane-acrylate rubber, and an acrylate rubber-based impact modifier.

In some embodiments, the one or more impact modifiers may include a butadiene rubber-based methyl methacrylate-styrene. In some embodiments, the one or more impact modifiers may include a styrene-butadiene rubber-based methyl methacrylate-styrene. In some embodiments, the one or more impact modifiers may include a methyl methacrylate-grafted impact modifier. In some embodiments, the one or more impact modifiers may include a siloxane-acrylate rubber. In some embodiments, the one or more impact modifiers may include an acrylate rubber-based impact modifier. A person of ordinary skill in the art, upon reviewing the entirety of this disclosure, will be able to identify suitable types of impact modifiers for the composition described in this disclosure.

In some embodiments, the more impact modifiers may include a core-shell structure. Exemplary types of impact modifiers with such a structure may include without limitation a methyl methacrylate-grafted impact modifier having a core-shell structure, a siloxane-acrylate rubber having a core shell structure, an acrylate rubber-based core-shell impact modifier, and/or the like. As used herein, a "core-shell" structure is a type of material structure with a first material encapsulated by, and interfacing with, a second material, wherein the first material has a different composition from the second material. A core-shell structure may be adopted by either inorganic or organic materials, often in order to improve certain physical properties and/or chemical characteristics thereof, such as without limitation solubility and chemical stability. As a nonlimiting example, a material degradable by oxygen gas in the ambient environment may be encapsulated and protected by a chemically inert shell to improve its stability and extend its lifetime. Additionally, the interface between the two types of materials in a core-shell structure may be either noncontinuous (e.g., with a sharp change in chemical composition, dielectric constant, polarity, and/or the like) or continuous (e.g., with a smooth gradient in chemical composition, dielectric constant, polarity, and/or the like).

In some embodiments, the composition may include no greater than 5% by weight of one or more impact modifiers. In some embodiments, the composition may include from 0 to 5% by weight of one or more impact modifiers. In some embodiments, the composition may include from 0.5% to 4% by weight of one or more impact modifiers. As nonlimiting examples, the composition may include no greater than 4% by weight, no greater than 3% by weight, no greater than 2% by weight, no greater than 1% by weight, and/or the like, of one or more impact modifiers. As further nonlimiting examples, the composition may include at least 0.1% by weight, at least 0.3% by weight, at least 0.5% by weight, at least 1% by weight, and/or the like, of one or more impact modifiers. As further nonlimiting examples, the composition may include at least 0.1% by weight and no greater than 1% by weight, at least 1% by weight and no greater than 2% by weight, at least 2% by weight and no greater than 3% by weight, at least 3% by weight and no greater than 4% by weight, at least 4% by weight and no greater than 5% by weight, and/or the like, of one or more impact modifiers.

### Fluoropolymer

In some embodiments, the composition may include at least a fluoropolymer. As used herein, a "fluoropolymer" is a class of polymer that contains one or more repeated C-F bonds in its chemical structure. Fluoropolymers generally exhibit weak London dispersion forces due to the large electronegativity and low polarizability of fluorine atoms. Additionally, C-F bonds have a relatively short bond length and are relatively harder to dissociate, which in turn renders fluoropolymers chemically inert in general. As a result, fluoropolymers are often used for antifouling surfaces (e.g., nonstick coating), lubrication, electric insulation, and/or the like.

In some cases, a fluoropolymer may include polytetrafluoroethylene (PTFE). As used herein, "polytetrafluoroethylene" or "PTFE" is a chemically inert, synthetic fluoropolymer of tetrafluoroethylene. It is available from Chemours (originally DuPont) under the brand name Teflon. PTFE is a hydrophobic (and sometimes omniphobic) solid and a nonstick material that may be used as an additive in composite materials across various industries. Additionally, and/or alternatively, a fluoropolymer may include polyvinylidene fluoride (PVDF), polyvinyl fluoride (PVF), polychlorotrifluoroethylene (PCTFE), fluorinated ethylene-propylene (FEP), polyethylenetetrafluoroethylene (ETFE), polyethylenechlorotrifluoroethylene (ECTFE), perfluoroalkoxy polymer (PFA/MFA), perfluorinated elastomer (FFPM/FFKM), fluoroelastomer (FPM/FKM) including vinylidene fluoride-based copolymer, fluoroelastomer (FEPM) including tetrafluoroethylene-propylene, perfluoropolyether (PFPE), and/or the like.

In some embodiments, the composition may include no greater than 0.8% by weight of a fluoropolymer. In some embodiments, the composition may include from 0 to 0.8% by weight of a fluoropolymer. In some embodiments, the composition may include from 0.01% to 0.8% by weight of a fluoropolymer. As nonlimiting examples, the composition may include no greater than 0.7% by weight, no greater than 0.6% by weight, no greater than 0.5% by weight, no greater than 0.4% by weight, no greater than 0.3% by weight, no greater than 0.2% by weight, no greater than 0.1% by weight, no greater than 0.05% by weight, and/or the like, of a fluoropolymer. As further nonlimiting examples, the composition may include at least 0.05% by weight, at least 0.1% by weight, at least 0.2% weight, at least 0.3% weight, at least 0.4% weight, at least 0.5% weight, at least 0.6% weight, at least 0.7% weight, and/or the like, of a fluoropolymer. As further nonlimiting examples, the composition may include at least 0.01% by weight and no greater than 0.05% by weight, at least 0.05% by weight and no greater than 0.1% by weight, at least 0.1% by weight and no greater than 0.2% by weight, at least 0.2% by weight and no greater than 0.3% by weight, at least 0.3% by weight and no greater than 0.4% by weight, at least 0.4% by weight and no greater than 0.5% by weight, at least 0.5% by weight and no greater than 0.6% by weight, at least 0.6% by weight and no greater than 0.7% by weight, at least 0.7% by weight and no greater than 0.8% by weight, and/or the like, of a fluoropolymer.

### Hydrolytically Stable Phenolic Antioxidant

**In** some embodiments, the composition may include a hydrolytically stable phenolic antioxidant. As used herein, a "hydrolytically stable" phenolic antioxidant is a phenolic antioxidant that is at least partially resistant against hydrolysis. As used herein, a "phenolic antioxidant" is a type of antioxidant that contains more or more phenolic moieties in its chemical structure. As used herein, a "phenolic moiety" is a type of chemical structure or substructure with one or more hydroxyl groups covalently linked to an aromatic ring. Upon donating a hydrogen atom (i.e., a proton and an electron) to a free radical, a phenolic moiety becomes a resonance-stabilized and/or sterically hindered free-radical product with reduced reactivity compared to the original free radical reactant. As a result, a phenolic moiety may be used as an antioxidant to effectively neutralize a free radical and prevent it from causing further oxidative damage.

In some cases, a hydrolytically stable phenolic antioxidant may include octadecyl 3-(3,5-di-tert-butyl-4-hydroxyphenyl)propionate. As used herein, octadecyl 3-(3,5-di-*tert*-butyl-4-hydroxyphenyl)propionate is a propionate-based, sterically hindered phenolic antioxidant that functions as a polymeric stabilizer by its butylphenol moiety. It is a white solid with a chemical formula of C₃₅H₆₂O₃ and available from BASF under the brand name BASF B900.

In some embodiments, the composition may include no greater than 0.2% by weight of a hydrolytically stable phenolic antioxidant. In some embodiments, the composition may include from 0 to 0.2% by weight of a hydrolytically stable phenolic antioxidant. In some embodiments, the composition may include from 0.05% to 0.2% by weight of a hydrolytically stable phenolic antioxidant. In some embodiments, the composition may include from 0.02% to 0.1% by weight of a hydrolytically stable phenolic antioxidant. As nonlimiting examples, the composition may include no greater than 0.18% by weight, no greater than 0.16% by weight, no greater than 0.14% by weight, no greater than 0.12% by weight, no greater than 0.1% by weight, no greater than 0.08% by weight, no greater than 0.06% by weight, no greater than 0.04% by weight, no greater than 0.02% by weight, and/or the like, of a hydrolytically stable phenolic antioxidant. As further nonlimiting examples, the composition may include at least 0.01% by weight, at least 0.02% by weight, at least 0.05% by weight, at least 0.1% by weight, and/or the like, of a hydrolytically stable phenolic antioxidant. As further nonlimiting examples, the composition may include at least 0.01% by weight and no greater than 0.05% by weight, at least 0.05% by weight and no greater than 0.1% by weight, at least 0.1% by weight and no greater than 0.15% by weight, at least 0.15% by weight and no greater than 0.2% by weight, and/or the like, of a hydrolytically stable phenolic antioxidant.

### Pentaerythritol Ester

In some embodiments, the composition may include no greater than 0.6% by weight of one or more pentaerythritol esters, such as without limitation as mold release. As used herein, a "pentaerythritol ester" is an ester of pentaerythritol. As nonlimiting examples, a pentaerythritol ester may include a methyl ester, an ethyl ester, an n-propyl or i-propyl ester, an n-butyl, i-butyl, or t-butyl ester, etc., of pentaerythritol. As nonlimiting example, a pentaerythritol ester may include pentaerythritol tetrastearate. As used herein, "pentaerythritol" is an organic compound with a chemical formula of C₅H₁₂O₄ and a structural formula of C(CH₂OH)₄. In some embodiments, the composition may include from 0 to 0.6% by weight of one or more pentaerythritol esters. In some embodiments, the composition may include from 0.1% by weight to 0.6% by weight of one or more pentaerythritol esters. As nonlimiting examples, the composition may include no greater than 0.5% by weight, no greater than 0.4% by weight, no greater than 0.3% by weight, no greater than 0.2% by weight, no greater than 0.1% by weight, and/or the like, of one or more pentaerythritol esters. As further nonlimiting examples, the composition may include at least 0.01% by weight, at least 0.05% by weight, at least 0.1% by weight, at least 0.2% by weight, and/or the like, of one or more pentaerythritol esters. As further nonlimiting examples, the composition may include at least 0.01% by weight and no greater than 0.1% by weight, at least 0.1% by weight and no greater than 0.2% by weight, at least 0.2% by weight and no greater than 0.3% by weight, at least 0.3% and no greater than 0.4% by weight, at least 0.4% by weight and no greater than 0.5% by weight, at least 0.5% by weight and no greater than 0.6% by weight, and/or the like, of one or more pentaerythritol esters. Additionally, and/or alternatively, octyldodecyl stearate can be used as mold release.

### Flexural Strength

In some embodiments, the composition retains a certain proportion of its original flexural strength after aging. As used herein, a "flexural strength" is a mechanical parameter describing an ability of a material to resist bending or deformation when a force is applied thereto. In some cases, flexural strength may also be referred to as bending strength, transverse rupture strength, or modulus of rupture. In some embodiments, the flexural strength of the composition may be measured or monitored in a climate-controlled environment, such as without limitation a climate oven. In some embodiments, the flexural strength of the composition may be measured or monitored under an aging condition such as a temperature of 85 °C and a relative humidity (RH) of 85%. In some embodiments, the composition may retain at least 75% of its original flexural strength after 1,000 hours of aging under the conditions specified in this paragraph. In some embodiments, the composition may retain at least 80% of its original flexural strength after 1,000 hours of aging under the conditions specified in this paragraph. In some embodiments, the composition may retain at least 85% of its original flexural strength after 1,000 hours of aging. In some embodiments, the composition may retain at least 90% of its original flexural strength after 1,000 hours of aging under the conditions specified in this paragraph. In some embodiments, the composition may retain at least 95% of its original flexural strength after 1,000 hours of aging under the conditions specified in this paragraph. In some embodiments, the composition may retain at least 99% of its original flexural strength after 1,000 hours of aging under the conditions specified in this paragraph.

### Reduced Thermal History

In some embodiments, the composition may be produced by a manufacturing process with a reduced thermal history. As used herein, a "thermal history" refers to an accumulated effect of thermal treatment on a particular chemical species, material, composition, or article. The thermal history of a manufacturing process can determine the degradation of a phosphate flame retardant, which results in a release of inorganic phosphate(s) that in turn negatively impacts the hydrolytic stability of the composition. In some cases, a thermal history may be correlated with the amount or percentage of time during which a chemical species, material, composition, or article is under an elevated temperature. In some other cases, a thermal history may be correlated with the temperature at which a chemical species, material, composition, or article is prepared or processed.

### In-Line Compounding

In some embodiments, the composite may be produced using an in-line compounding method. As used herein, an "in-line compounding method" is a type of a manufacturing process where the mixing of different components occurs continuously and directly within the production line to create a final material, without a need for a separate compounding step to create pre-mixed pellets. Essentially, for an in-line compounding method, the compounding step occurs "in-line" with the extrusion process itself. An in-line compounding method may allow for immediate processing of raw material(s), in a single operation, into one or more desired final products, such as without limitation plastics, which may be in forms such as without limitation a film, sheet, and/or profile, among others. Traditionally, two or more steps are typically used to make a glass-filled article in an LFT-D process; in contrast, in-line compounding can eliminate the need of making a compound in advance and use an LFT-D process directly to prepare a compound and/or article in one step. Such a one-step approach is beneficial to reducing thermal history of a manufacturing process. As a nonlimiting example, an in-line compounding method may include mixing all ingredients in the LFT-D process, followed by direct molding. Such a design may eliminate the need for additional compounding step(s) when producing a compound of PC/organic phosphate flame retardant. With a reduced thermal history, the degradation of organic phosphate flame retardant may be minimized, and the generation of inorganic phosphates may accordingly be reduced. Additionally, and/or alternatively, other processes that are capable of minimizing thermal load and/or suppressing the level of inorganic phosphate, as recognized by a person of ordinary skill in the art, upon reviewing the entirety of this disclosure, may also be implemented for production of the composition described herein.

### LFT-D, LFT-G, and GMT

In some embodiments, the composition may be prepared using long fiber-reinforced thermoplastic direct molding (LFT-D). As used herein, "long fiber reinforced thermoplastic in direct processing" or "LFT-D" refers to a type of manufacturing technology for synthesis of polymer or composite materials or a product produced using such technology. In a typical LFT-D process, polymer pellets and additives may be fed into a dosing and feeding unit, which is initially programmed to ensure that the materials are fed at a designed ratio. The proportionally dosed feedstock may subsequently be plasticized and mixed in a first twin-screw extruder, where the molten polymer is passed through a film die to form a waterfall-like polymer film. Glass fibers may then be preheated, dispersed, introduced to the top of the polymer film, through a specially designed yarn frame, and merged with the film into a second twin-screw extruder. At the second twin-screw extruder, the glass fibers may be impregnated, cut, and mixed to form a continuous block. A cutting tool located at the front end of the second twin-screw extruder may cut the block to meet the molding area of the product. A conveyor belt may transport the cut block to an appropriate location and send it into a mold for low-temperature molding.

In some embodiments, the composition may be prepared using long fiber-reinforced thermoplastic granulation (LFT-G). As used herein, "long fiber reinforced thermoplastic granulation" or "LFT-G" refers to a type of manufacturing technology for synthesis of polymer or composite materials or a product produced using such technology. An LFT-G process may be used to produce pellets or granules of injection-moldable plastic that contain continuous fiber filaments running the length of the pellet or granule.

In some embodiments, the composition may be prepared as a glass mat thermoplastic (GMT). As used herein, "glass mat thermoplastic" or "GMT" is a lightweight composite material made from glass fiber and thermoplastic resin. In some cases, glass mat thermoplastic may be referred to as glass mat reinforced thermoplastic, glass fiber mat reinforced thermoplastic, or glass fiber mat reinforced thermoplastic composite. A GMT is typically manufactured by impregnating a glass fiber mat with a polymer matrix to form a sheet, then heating and compressing the sheet into a desired shape.

Compared to GMT and LFT-G, which may rely on semi-finished sheets or pellets, LFT-D may be produced directly from polymer masterbatches and glass fibers on a regular and/or continuous basis, thereby eliminating the intermediate process of sheeting or pelletizing. Such features may help reduce costs and make it easier and more practical to select raw materials for a specific product. Polymer pellets may be quickly adjusted and converted to meet product requirements and adverse conditions that occur during production. The fibers used for reinforcement may be varied in terms of formulation content and length according to the mechanical properties required and/or desired. For certain physical properties and/or characteristics, such as without limitation thermal stability, flame retardancy, heat aging resistance, coloring, water absorption resistance, etc., the performance of final products may be improved by directly adding other modification additives, consistent with details described elsewhere in this disclosure. An LFT-D process may result in a customized material formulation that may be further adapted according to the performance requirements of different products.

As used herein, a "long fiber reinforced thermoplastic" or "LFT" is a type of composite material synthesized from a thermoplastic resin with long fibers embedded therein. In some cases, long fiber reinforced thermoplastic may be referred to as long fiber-reinforced thermoplastic, long-fiber-reinforced thermoplastic, long fiber thermoplastic, or LFRT. Compared to ordinary fiber reinforced thermoplastic materials, which typically contain a fiber length of no greater than 1 mm, LFTs generally contain fibers that are greater than 2 mm, sometimes above 5 mm. LFTs may have superior mechanical properties including without limitation high strength, stiffness, and/or impact resistance, among others, compared to short fiber reinforced plastics. LFT materials may be produced using compression molding, injection molding, consistent with details described elsewhere in this disclosure, and/or other techniques similar thereto, as recognized by a person of ordinary skill in the art, upon reviewing the entirety of this disclosure. LFTs may be applied to in automobiles, electronics, electric power industry, communication, machinery, chemical industry, military uses, sports equipment, medical equipment, among others. As a nonlimiting example, LFTs may be used to manufacture special plastics for auto parts and accessories.

### Method of Preparing an Extrudate of a Hydrolytically Stable Composition by an LFT-D process

FIG. 1 depicts an exemplary embodiment of a method 100 for preparing a hydrolytically stable, polycarbonate-containing composition and/or an extrudate thereof. At step 105, method 100 may include providing a PC polymer, an organic phosphorus-containing flame retardant, and one or more reinforcing fibers, to one or more extruders to produce a final extrudate. As used herein, an "extruder" is a machine used to shape materials by forcing them through a die to create a continuous profile. An extruder typically works by applying heat and pressure to raw materials, forming them into specific shapes as they are pushed through a nozzle or mold. The manufacturing process that involves the use of an extruder is accordingly termed extrusion. To perform extrusion, a high temperature is required to keep the polymer mixture under at least a semi-molten state and ensure a smooth flow through the die. Such an extrusion process may require a precise control over temperature and pressure for successful shaping.

At step 110, method 100 may further include forming the final extrudate into a desired dimension or weight to produce the hydrolytically stable, polycarbonate-containing composition. The composition may include no greater than 5 ppm of inorganic phosphate, consistent with details described above. In some embodiments, at step 115, method 100 may further include molding the final extrudate using a compression molding tool. In some embodiments, the compression molding tool may be held at a temperature of at least 90 °C and no greater than 110 °C. More specifically, in some embodiments, the compression molding tool may be held at a temperature of at least 95 °C and no greater than 105 °C. More specifically, in some embodiments, the compression molding tool may be held at a temperature of at least 90 °C and no greater than 100 °C. More specifically, in some embodiments, the compression molding tool may be held at a temperature of at least 100 °C and no greater than 110 °C. As a nonlimiting example, the compression molding tool may apply a pressure of approximately 200 bar for approximately 1 min to mold the final extrudate.

In some embodiments, the composition may be prepared at a temperature of no greater than 310 °C. In some embodiments, the composition may be prepared at a temperature of at least 290 °C and no greater than 310 °C. In some embodiments, the composition may be prepared at a temperature of at least 300 °C and no greater than 310 °C. In some embodiments, the composition may be prepared at a temperature of at least 295 °C and no greater than 305 °C. In some embodiments, the composition may be prepared at a temperature of approximately 300 °C. Such temperature control may reduce the thermal history of the composition and accordingly suppress the formation of inorganic phosphates, consistent with details described elsewhere in this disclosure.

Alternatively, in some embodiments, the method for preparing a hydrolytically stable, polycarbonate-containing composition may include providing a PC polymer and an organic phosphorus-containing flame retardant. The method may further include mixing the PC polymer and the organic phosphorus-containing flame retardant at a first extruder to produce an extruded melt. The method may include mixing the PC polymer and the organic phosphorus-containing flame retardant using an in-line compounding method, consistent with details described above in this disclosure. The method may further include providing one or more reinforcing fibers to the extruded melt, at a second extruder, to produce a final extrudate. In some embodiments, the second extruder may be held at a first temperature of at least 270 °C and no greater than 330 °C. More specifically, in some embodiments, the second extruder may be held at a first temperature of at least at least 290 °C and no greater than 310 °C. In some preferred embodiments, the second extruder may be held at a first temperature of approximately 300 °C. The method may further include dividing the final extrudate into a desired dimension and/or weight to produce the hydrolytically stable, polycarbonate-containing composition. In some embodiments, the composition may include no greater than 5 ppm of inorganic phosphate, consistent with details described above. In some embodiments, the method may include molding the final extrudate using a compression molding tool, wherein the compression molding tool is held at a second temperature of at least 90 °C and no greater than 110 °C. In some embodiments, the compression molding tool may be held at a second temperature of at least 95 °C and no greater than 105 °C. In some embodiments, the compression molding tool may be held at a second temperature of at least 90 °C and no greater than 100 °C. In some embodiments, the compression molding tool may be held at a second temperature of at least 100 °C and no greater than 110 °C. As a nonlimiting example, the compression molding tool may apply a pressure of approximately 200 bar for approximately 1 min to mold the final extrudate.

### Use of the Hydrolytically Stable Composition

In some embodiments, the composition may be used in one or more members selected from a group consisting of household appliances, automobiles, aircraft, construction materials, consumer products, food storage and packaging, medical devices, energy storage devices, home batteries, and sport equipment. In some embodiments, the composition may be used in one or more of household appliances such as without limitation air conditioners, coffee machines, food mixers and processors, microwaves, ovens, washing machines, hair dryers, steam irons, water tanks, and/or the like. In some embodiments, the composition may be used in automobiles and parts thereof, such as without limitation light housing, headlamp bezels, lenses, and/or the like. In some embodiments, the composition may be used in aircraft, such as without limitation as transparent windows. In some embodiments, the composition may be used as a construction material in, for example and without limitation, agricultural houses, industry or public building, facades, security/bullet-proof windows, shelters, skylights, streetlamp covers, and/or the like. In some embodiments, the composition may be used in consumer products, such as without limitation in CDs, DVDs, safety goggles/protective glasses, shatter-proof sunglasses, face shields, ophthalmic lenses, water bottles, and/or the like. In some embodiments, the composition may be used in food storage and packaging, such as without limitation in lunch boxes and beverage containers. In some embodiments, the composition may be used in medical devices, such as without limitation in surgical instruments, drug delivery systems, hemodialysis membranes, blood reservoirs, blood filters, and/or the like. In some embodiments, the composition may be used in energy storage devices such as batteries, capacitors, flow cells, photovoltaics, and/or the like. In some embodiments, the composition may be used in home batteries such as lithium-ion batteries, lead-acid batteries, and/or the like. In some embodiments, the composition may be used in sport equipment, such as without limitation in ski clamp parts, helmets, and/or the like. In some embodiments, the composition may be used in one or more battery pack-related components, such as those used in electric vehicles (EVs). As nonlimiting examples, the composition may be used in a top cover that protects the battery cells from external impacts and environmental factors; a bottom plate that provides structural support, which often includes fire-resistant materials; one or more side walls that enclose the sides of a battery pack for additional protection and structural integrity; a cooling plate, which may be integrated into an enclosure to manage the temperature of a battery cell; a sealing gasket, which can be used to ensure that an enclosure is watertight and dustproof; a crash absorption zone designed to absorb energy in the event of a collision and protect a battery cells; an electrical connector used to facilitate the connection of a battery cell to a vehicle's electrical system; thermal insulation used for maintaining an optimal battery temperature; a mounting bracket for securing a battery pack to a vehicle chassis; and/or a ventilation system for the release of gas in case of thermal runaway.

### Article of Manufacture Using the Composition

In some embodiments, an article of manufacture may be configured to include, incorporate, or contain the hydrolytically stable, polycarbonate-containing composition, consistent with details described above. Additionally, and/or alternatively, the article of manufacture may include any suitable and/or relevant article of manufacture, as recognized by a person of ordinary skill in the art, upon reviewing the entirety of this disclosure.

### Method of Increasing of Hydrolytic Stability of a Flame-Retardant Article

In some embodiments, the method for increasing the hydrolytic stability a flame-retardant article may include adding to the article the hydrolytically stable, polycarbonate-containing composition, consistent with details described above.

### Additional Applications

Aspects of this disclosure may be used to improve the long-term hydrolytic stability of flame-retardant PC compound and composites. Aspects of this disclosure may be suitable for use in applications or processes such as without limitation PC LFT-D direct compression molding of glass filled PC composite, PC LGF or LFT-G pultruded long glass fiber PC granule for injection molding, PC LFT-filled PC composite extruded sheet, PC glass fabric-based composites (i.e., organosheets), PC-based unidirectional tape/laminate (i.e., UD), and/or the like.

As used herein, "pultrusion" is a manufacturing process that uses a pulling action to create long, strong, and/or lightweight composite materials. The term "pultrusion" is an amalgamation of the words "pull" and "extrusion". Pultrusion is a fast and economic way to impregnate and cure materials and may, in some cases, be configured as a continuous, fully automatable process. In a typical pultrusion process, continuous fibers may be pulled through a resin bath to impregnate them, and the impregnated fibers may then be pulled through a heated die, where the resin cures, to create a solid composite profile. Pultrusion may be used to produce fiber-reinforced plastic profiles of various cross-sectional shapes, including without limitation hollow tubes, flat sheets, beams, and/or the like.

### EXAMPLES

### Comparative example:

As a comparative example, PC pellets were pre-compounded separately as Composition A. Composition A included 12.5% of BAPP by weight and was prepared in a 25-mm twin-screw extruder. Conditions used for pelletization are summarized below in Table 1. All components were added to the feed hopper of the compounding extruder.

**Table 1: Summary of Conditions Used for Pelletization of Composition A.**

| | | |
|---|---|---|
| Mass Flow Rate | | 20 kg/hr |
| Screw Speed | | 400 rpm |
| Temperatures (°C) | Zone 1 | 175 |
| | Zone 2 | 260 |
| | Zone 3 | 275 |
| | Zone 4 | 285 |
| | Zone 5 | 290 |
| | Zone 6 | 300 |
| | Die | 300 |

The molding step was completed by an LFT-D process, consistent with details described elsewhere in this disclosure. Composition A was melted at a first extruder, and the extruded melt from the first extruder was fed into a second extruder. Glass roving was pulled from the bobbins into the second extruder at 300 °C. In the second extruder, the glass roving was broken into shorter fibers and mixed into a final extrudate at 300 °C. The final extrudate was collected and cut into desired dimension and weight and then conveyed by a steel mesh conveyer. Lastly, the final extrudate was placed into a compression molding tool, with a tool temperature at 90-110 °C. A test plaque was produced by compressing the final extrudate at 200 bar for 1 minute.

### Inventive Example:

Without a pre-compounding step, a test plaque was made in a single LFT-D step using Composition B. Compared to Composition A, Composition B was prepared, handled, and/or processed with reduced compounding and molding to reduce the thermal history of the composition and suppress the formation of inorganic phosphate. Composition B, which includes PC and BAPP, was firstly fed and mixed at a first extruder directly, and an extruded melt from the first extruder was subsequently fed into a second extruder. Glass roving was pulled from the bobbins into the second extruder at 300 °C. In the second extruder, the glass roving was broken into shorter fibers and mixed into a final extrudate at 300 °C. The final extrudate was collected and cut into desired dimension and weight and then conveyed by a steel mesh conveyer. Lastly, the final extrudate was placed into a compression molding tool, with a tool temperature at 90-110 °C. A test plaque was produced by compressing the final extrudate at 200 bar for 1 minute, consistent with details described above.

A comparison between Compositions A and B are summarized below in Table 2.

**Table 2: A Comparison between Compositions A and B.**

| | Comparative Example | Example |
|---|---|---|
| Composition | A | B |
| PC (Trinseo Polycarbonate Calibre 300-23) | 61.25 wt% | 61.25 wt% |
| BAPP (from REOFOS) | 8.75 wt% | 8.75 wt% |
| Glass roving (Johns Manville StarRov 853 2400 tex) | 30% | 30% |

An inorganic phosphate (PO₄³⁻) content analysis was performed on the two compositions using ion chromatography (IC) before aging. The (solid) samples were cut into small, 0.5-g pieces and dissolved in 25 mL dichloromethane. 10 mL of Milli-Q water was added to the sample solutions, after which the samples were agitated at room temperature for 4 hours for extraction. An aliquot of the aqueous supernatant after extraction was analyzed by IC according to an in-house method to determine the inorganic phosphate (PO₄³⁻) content, using external standards of phosphate for calibration. While Composition A contained 5.2 ppm of inorganic phosphate, Composition B contained less than 1 ppm of inorganic phosphate instead due to a less efficient degradation of organic phosphate fire retardant and a suppressed generation of byproducts therefrom.

The two types of test plaques prepared using LFT-D, as described above, were milled into specimens for aging and flexural test. The specimens were aged in a climate chamber (e.g., a climate oven) under a hydrothermal aging condition of 85 °C, 85% RH for 1,000 hours. Flexural modulus and flexural strength were tested on cut composite plaque according procedure ISO 178.

A comparison of the test results is summarized below in Table 3.

**Table 3: A Comparison between Flexural Test Results of Compositions A and B.**

| | Comparative Example | Example |
|---|---|---|
| Composition | A | B |
| Inorganic phosphate (mg/kg or ppm) | 5.2 | < 1 |
| Flexural Strength at 0 hour (MPa) | 125 | 121 |
| Flexural Strength at 1,000 hours hydrothermal aging (MPa) | 68 | 113 |
| Flexural strength loss at 1,000 hours | 45% | 15% |

Composition B showed superior hydrolytic stability than Composition A due to its lower inorganic phosphate content. Specifically, while Composition B with less than 1 ppm of inorganic phosphate retained 85% of its flexural strength after 1,000 hours of aging, Composition A with 5.2 ppm of inorganic phosphate retained only 55% of its flexural strength.

It should be understood that modifications to the embodiments disclosed herein can be made to meet a particular set of design criteria. For instance, the number of or configuration of components or parameters may be used to meet a particular objective.

It will be apparent to those skilled in the art that numerous modifications and variations of the described examples and embodiments are possible in light of the above teachings of the disclosure. The disclosed examples and embodiments are presented for purposes of illustration only. Other alternative embodiments may include some or all the features of the various embodiments disclosed herein. For instance, it is contemplated that a particular feature described, either individually or as part of an embodiment, can be combined with other individually described features, or parts of other embodiments. The elements and acts of the various embodiments described herein can therefore be combined to provide further embodiments.

It is the intent to cover all such modifications and alternative embodiments as may come within the true scope of this invention, which is to be given the full breadth thereof. Additionally, the disclosure of a range of values is a disclosure of every numerical value within that range, including the end points. Thus, while certain exemplary embodiments of the device and methods of making and using the same have been discussed and illustrated herein, it is to be distinctly understood that the invention is not limited thereto but may be otherwise variously embodied and practiced within the scope of the following claims.

## Claims

1. A hydrolytically stable composition comprising:
at least 15% by weight and no greater than 95% by weight of a polycarbonate (PC) polymer;
at least 2% by weight and no greater than 25% by weight of an organic phosphorus-containing flame retardant; and
no greater than 5 ppm of inorganic phosphate.

2. The composition according to claim 1, wherein the composition comprises at least 30% by weight and no greater than 75% by weight of the PC polymer.

3. The composition according to claim 1 or 2, wherein the PC polymer comprises a recycled polycarbonate; and/or wherein the PC polymer comprises a PC-siloxane copolymer.

4. The composition according to any one of claims 1 to 3, wherein the composition comprises at least 3% by weight and no greater than 10% by weight of the organic phosphorus-containing flame retardant.

5. The composition according to any one of claims 1 to 4, wherein the organic phosphorus-containing flame retardant includes one or more members selected from a group consisting of an oligomeric phosphate including bisphenol A bis(diphenyl phosphate) (BAPP), a poly(block-phosphonato-ester), a poly(block-phosphonato-carbonate), phosphoric acid 1,3-phenylene tetrakis(2,6-dimethylphenyl) ester, and resorcinol bis(2,6-dixylenyl phosphate).

6. The composition according to any one of claims 1 to 5, wherein the composition further comprises no greater than 80% by weight of one or more reinforcing fibers; preferably wherein the one or more reinforcing fibers include one or more members selected from a group consisting of glass fiber, carbon fiber, steel fiber, basalt fiber, aluminum fiber, magnesium fiber, nickel fiber, nickel-coated carbon fiber, nickel-coated basalt fiber, polyacrylonitrile fiber, polyaramid fiber, natural cellulose fiber, and mineral fiber.

7. The composition according to any one of claims 1 to 6, wherein the composition further comprises no greater than 5% by weight of one or more impact modifiers; preferably wherein the one or more impact modifiers include one or more members selected from a group consisting of a butadiene rubber-based methyl methacrylate-styrene, a styrene-butadiene rubber-based methyl methacrylate-styrene, a methyl methacrylate-grafted impact modifier, a siloxane-acrylate rubber, and an acrylate rubber-based impact modifier; and/or wherein the one or more impact modifiers comprise a core-shell structure.

8. The composition according to any one of claims 1 to 7, wherein the composition further comprises no greater than 0.8% by weight of at least a fluoropolymer.

9. The composition according to any one of claims 1 to 8, wherein the composition further comprises no greater than 0.2% by weight of a hydrolytically stable phenolic antioxidant.

10. The composition according to any one of claims 1 to 9, wherein the composition further comprises no greater than 0.6% by weight of a pentaerythritol ester.

11. The composition according to any one of claims 1 to 10, wherein the composition retains at least 70% of its original flexural strength after 1,000 hours of aging under 85 °C and 85% relative humidity.

12. The composition according to any one of claims 1 to 11, wherein the composition is prepared using long fiber-reinforced thermoplastic direct molding (LFT-D) or long fiber-reinforced thermoplastic granulation (LFT-G).

13. The composition according to any one of claims 1 to 12, wherein the composition is prepared using an in-line compounding method.

14. A method of preparing a hydrolytically stable, polycarbonate-containing composition,
wherein the method comprises:
providing a PC polymer, an organic phosphorus-containing flame retardant, and one or
more reinforcing fibers, to one or more extruders to produce a final extrudate; and forming the final extrudate into a desired dimension or weight to produce the hydrolytically
stable, polycarbonate-containing composition, wherein the composition comprises no greater than 5 ppm of inorganic phosphate.

15. The method according to claim 14, wherein the composition is prepared at a temperature of no greater than 310 °C.

16. The method according to claim 14 or 15, wherein the method further comprises molding the final extrudate using a compression molding tool.

17. Use of the hydrolytically stable composition according to any one of claims 1 to 13 or of the hydrolytically stable polycarbonate-containing composition obtainable by the method of any one of claims 14 to 16 in one or more members selected from a group consisting of household appliances, automobiles, aircraft, construction materials, consumer products, food storage and packaging, medical devices, energy storage devices, home batteries, and sport equipment.

18. An article of manufacture comprising the hydrolytically stable, polycarbonate-containing composition according to any one of claims 1 to 13 or obtainable by the method of any one of claims 14 to 16.

19. A method of increasing hydrolytic stability of a flame-retardant article comprising adding to the article the hydrolytically stable, polycarbonate-containing composition according to any one of claims 1 to 13 or obtainable by the method of any one of claims 14 to 16.
